# EUROPEAN PATENT APPLICATION

(11) **EP 0 662 389 A2**
(43) Date of publication of application: **12.07.1995**
(21) Application number: 94309840.0
(22) Date of filing: 28.12.1994
(51) Int. Cl.: B29C 65/14

(54) **Method for welding tubular members**

(30) Priority: 28.12.1993 JP 350096/93
(71) Applicant: KUREHA KAGAKU KOGYO KABUSHIKI KAISHA, Chuo-ku Tokyo 103 (JP)
(72) Inventor: Usui, Satoshi, c/o Nishiki Research Laboratory, Iwaki-shi, Fukushima-ken 974 (JP)
(74) Representative: Baverstock, Michael George Douglas

(57) **Abstract**

In the welding method of tubular members made of a thermoplastic synthetic resin, end faces to be welded, of a pair of tubular members (12) are melted by heat of a heater (18), and the end faces are urged against each other to be welded. Prior to the melting of the end faces (20a,20b), each of the end faces is processed to a shape comprising a flat, annular, outer portion and a flat, annular, inner portion. The inner portion and outer portion both are perpendicular to the center axis of the tubular member, and the outer portion is set outside the inner portion along the center axis. Such a welding method can minimize the bead formed on the inner circumferential surface and can achieve a high weld strength.

## Description

The present invention relates to a butt welding method or butt fusion method, more particularly, a method for connecting a pair of tubular members made of a thermoplastic resin by heating end faces thereof and then pressing them together.

Tubular members made of a variety of synthetic resins are conventionally used in various applications. For example, tubular members formed of a general-purpose thermoplastic resin such as polyvinyl chloride, polypropylene, etc. are popularly used as distributing water pipes in houses or plants, etc., pipes for chemicals, etc. Further, tubular members made of a thermoplastic resin excellent in heat resistance and solvent resistance such as polyether ether ketone or polyphenylene sulfide, etc. are used as pipes for ultrapure water, in fabrication of electronic devices such as LSI, etc.

In actual piping using such tubular members of thermoplastic synthetic resins, it becomes necessary to connect a tubular member to another or to connect a tubular member to a tubular end of an instrument. One of the known connection methods between tubular members is a butt welding method or butt fusion method in which a heater heats to melt end faces of two tubular members to each other and thereafter the melted end faces are urged against each other to be connected thereby. This welding method can be classified into a contact type welding method in which end faces to be welded are melted in direct contact with the heater, and a non-contact type welding method in which end faces to be welded are melted not in contact with the heater with a gap between the heater and the end faces.

In the welding methods described above, the molten resin is pushed out radially inwardly and outwardly by the pressure upon welding, so that a projection called generally a "bead" is possibly formed on an inner circumferential surface or on an outer circumferential surface of the weld portion between the tubular members.

A bead formed on an inner circumferential surface of tube would cause a pressure loss of fluid flowing therein. Also, because a flow of fluid stagnates or is disturbed near the bead, microorganisms or fine particles could stay there. It is needless to mention that a pipe having a bead where microorganisms etc. could stay is not suitable particularly for use as a pipe for ultrapure water.

There is a method conventionally suggested, for example as disclosed in Japanese Laid-open Patent Application No. 64-71731, in which an expandable core is set inside the weld portion between the tubular members so as to fit on the inner circumferential surface thereof. This method, however, is not practically used in the welding method of the non-contact type because holding of the core is difficult.

Further, Japanese Laid-open Patent Applications No. 1-110128 and No. 2-106325 describe a method in which inner edges of end faces to be welded are tapered so that when the end faces of tubular members are made to abut each other, cross sections thereof make a space of isosceles triangle, a so-called V-shape groove or bevel. When a pair of tubular members are pressed against each other to be joined, in the case of such a V-shape groove, the pressing force pushes out a molten resin in the weld portion, whereby the molten resin advances radially inward along the taper faces of the tubular members forming the groove so as to fill the groove. Accordingly, properly setting the size of the groove, the bead would be enough to fill the groove but not too much. Thus, an amount of projection from the inner surface of tube becomes smaller than in the case of no groove.

It is, however, difficult to form a groove of proper size. In actual use, when the welding is performed in such a manner that the molten resin or bead fully fills the groove, a relatively large bead projects from the inner circumferential surface of the pipe in spite of the formation of a groove. On the other hand, if the tubular members are pressed under a low pressure so as to reduce the projection amount of bead, the groove cannot be filled with the molten resin, resulting in forming a recess in the inner circumferential surface of pipe. Such a recess would become a place where microorganisms etc. stay. Also, this recess causes a notch effect. Specifically, when a stress is imposed on the pipe, the stress is concentrated on this recess so as to lower the mechanical strength of pipe, making the pipe undurable for practical use.

It is, therefore, an object of the invention to provide a welding method by which a size-limited bead is formed and a high weld strength can be attained.

To achieve the above object, the present invention is characterized by a welding method for tubular members in which end faces to be welded, of a pair of tubular members made of a thermoplastic resin are melted by heat of a heater, comprising a step of, prior to the melting of the end faces of the tubular members, processing each of the end faces into a shape comprising a flat, annular, inner portion which is normal to a center axis of the corresponding tubular member, and a flat, annular, outer portion arranged coaxially outside the inner portion, located at a position outside the inner portion along the center axis, and being normal to the center axis.

It should be noted that in the present invention the tubular members include tube connectors, profiles and nozzles, etc., and tubular portions of meters or devices such as valves as well as the pipes and tubes.

According to the welding method of the present invention as described above, there is almost no bead projecting from the inner circumferential surface of the weld portion of the pair of tubular members, and even if a bead is formed its size is very small.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.
In the drawings:
Fig. 1 is a schematic, explanatory drawing to show a non-contact-type welding apparatus which is applicable to the welding method according to the present invention;
Fig. 2 is a cross-sectional, partial drawing to show an enlarged shape of an end face of a tubular member processed according to an embodiment of the present invention;
Fig. 3 is a cross-sectional, partial drawing to show an enlarged shape of an end face of a tubular member processed according to a second embodiment of the present invention;
Fig. 4 is a cross-sectional, partial drawing to show an enlarged shape of an end face of a tubular member processed according to a third embodiment of the present invention; and
Fig. 5 is a cross-sectional part to show an enlarged shape of an end face of a tubular member processed for comparison with the present invention.

The preferred embodiments of the present invention will be described in detail with reference to the accompanying drawings.

The welding method of tubular members according to the following embodiments is of the so-called non-contact type, and the tubular members applied are formed by extrusion molding of a thermoplastic synthetic resins, for example, fluororesins such as perfluoroalkoxy resins polyether ether ketone, and polyphenelene sulfide

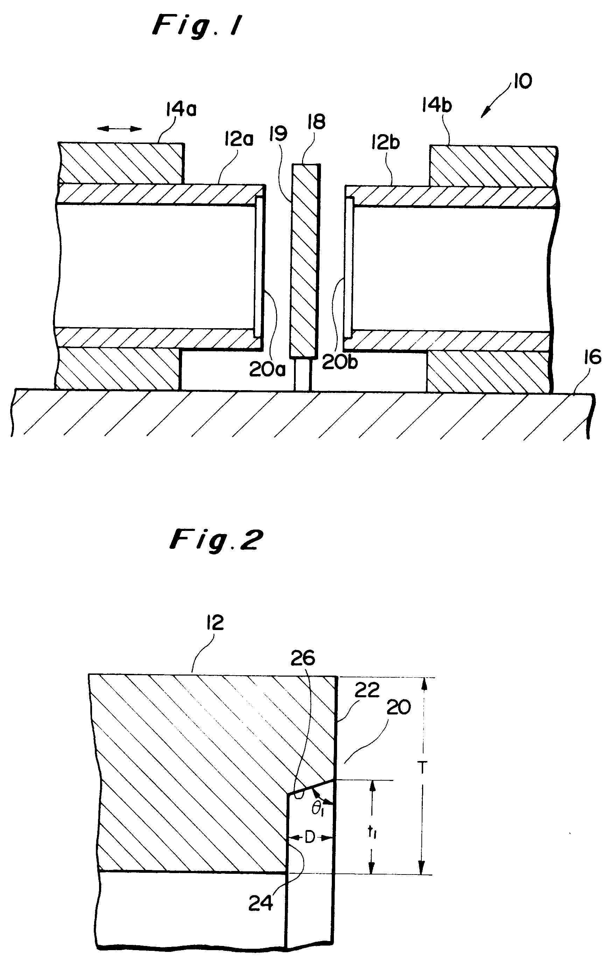

Fig. 1 shows a welding apparatus 10 applicable to the non-contact-type welding method according to the present invention. This welding apparatus 10 is well known, and is provided with clamps 14a, 14b for holding a pair of tubular members 12a, 12b, respectively, on a same axis. One clamp 14a is set on a base 16 of welding apparatus 10 so as to be movable toward or away from the other clamp 14b. A heater 18 for heating to melt opposed end faces 20a, 20b of the tubular members 12a, 12b is set between the clamps 14a, 14b, being arranged as capable of receding from a movement path of the tubular member 12a. The heater 18 is preferably one consisting of a brass heating plate 19 and a rod heater (not shown) provided in the heating plate 19, but there is no specific restriction on the material for the heating plate 19. For example, the material for the heating plate 19 may be a metal selected from aluminum, brass, iron and copper. The heating plate 19 may be subjected to a surface treatment such as coating or surface finishing, if necessary. Also, instead of the rod heater, the heater may be a nichrome wire etc. cast in the heating plate 19.

For welding the pair of tubular members 12a, 12b of a same shape using such a welding apparatus 10, the tubular members 12a, 12b are first held by the corresponding clamps 14a, 14b. By this, the tubular members 12a, 12b are set on a same axis, and the end faces 20a, 20b to be welded are set as opposed to each other with a predetermined distance between the end faces. Next, the heater 18 is disposed between the end faces 20a, 20b of tubular members 12a, 12b, and a current is supplied to the rod heater in the heater 18. After heating for a predetermined time, the heater 18 is moved to a receding position and one movable clamp 14a is moved toward the other clamp 14b. Then, the end faces 20a, 20b are urged against each other under a predetermined pressure for a predetermined time, thereby joining the tubular members 12a, 12b.

The above is the method which has been performed heretofore. Thus, if the end faces 20a, 20b of tubular members 12a, 12b are not processed at all, large beads are formed on the inner circumferential surface and on the outer circumferential surface of the tube. In the welding method according to the present invention, the end faces 20a, 20b of tubular members 12a, 12b are processed prior to the above welding step in order to remove or minimize the bead on the inner circumferential surface of the tube.

Fig. 2 is a cross-sectional view to show an enlarged shape of an end face to be welded, of one tubular member. Here, the other tubular member is also subjected to the same processing, but for simplicity the description concerns only one tubular member. As shown in Fig. 2, the end face 20 of tubular member 12 is stepped and is composed of an annular outer portion 22 and an annular inner portion 24 arranged coaxially and radially inside the outer portion 22. Each of the outer portion 22 and inner portion 24 is substantially a flat surface, which makes right angles with the center axis of tubular member 12. Also, the outer portion 22 projects outwardly from the inner portion 24 along the center axis with a predetermined distance between them. Further, a boundary surface 26 formed between an inner circumferential edge of the outer portion 22 and an outer circumferential edge of the inner portion 24 is a cylindrical surface or a conical surface. This end face shape may be formed on the face 20 of tubular member 12 from the beginning of molding, or may be formed in situ of welding by an appropriate cutting or grinding apparatus.

Now, letting T be a wall thickness of the tubular member 12, more specifically a wall thickness of an end portion adjacent to the end face 20 to be welded, t₁ be a distance along the radial direction from the inner circumferential edge of the outer portion 22 to the inner circumferential surface of the tubular member 12, D be a distance along the direction of the axis between the outer portion 22 and the inner portion 24, and ϑ₁ be an angle between the face formed by the outer portion 22 and the generatrix or generant of the boundary surface 26, various experiments showed that the following conditions were preferably satisfied by the respective factors.

First, t₁ is normally set in the range of 0.1T ≦ t₁ ≦ 0.8T, preferably in the range of 0.15T ≦ t₁ ≦ 7T, more preferably in the range of 0.2T ≦ t₁ ≦ 0.6T. If t₁ is smaller than 0.1T, or if it is larger than 0.8T, it is substantially the same as the non-processed end face 20. If welding is performed by the welding apparatus 10 under such a condition, i.e. t₁ < 0.1T or t₁ > 0.8T, a large bead is formed on the inner circumferential surface of the tube.

The distance D is independent of the thickness T insofar as the welding conditions are not greatly affected by a change of thickness T of tubular member 12 to be welded. The distance D is normally set in the range of 0.1 mm ≦ D ≦ 1.5 mm, preferably in the range of 0.2 mm ≦ D ≦ 1.25 mm, more preferably in the range of 0.3 mm ≦ D ≦ 1.0 mm. If D is smaller than 0.1 mm, there is no substantial difference from the non-processed end face 20, forming a large bead on the inner circumference of tube. On the other hand, if D is greater than 1.5 mm, the difference becomes unignorably large between the distance from the heater 18 to the outer portion 22 of end face 20 and the distance from the heater 18 to the inner portion 24 of end face 20, whereby melting behavior greatly differs between the outer portion 22 and the inner portion 24, thus failing to obtain a desired strength after welding.

Also, ϑ₁ is normally set in the range of 45° ≦ ϑ₁ ≦ 90°, preferably in the range of 45° ≦ ϑ₁ ≦ 85°. If ϑ₁ is smaller than 45°, an area of the inner portion 24 decreases so as to form a large bead on the inner circumference of tube. If ϑ₁ is greater than 90°, an angle between the generatrix of the boundary surface 26 and the outer portion 22 becomes acute, so that the inner circumferential edge of the outer portion 22 comes to be located radially inward of the outer circumferential edge of the inner portion 24. Then, there would be cases where when the inner circumferential edge of the outer portion 22 is crushed upon welding, the boundary surface 26 covers the outer circumferential edge of the inner portion 24 so as to enclose air bubbles therein. Such bubbles negatively affect the weld strength.

After the end faces of the tubular members 12a, 12b to be welded are processed or machined so as to satisfy the above conditions, the tubular members 12a, 12b are welded using the welding apparatus 10 as described above, rarely forming a bead on the inner circumferential surface in the weld portion of tubular members 12a, 12b. Even if a bead is formed, the amount of projection thereof is very small. In the welding method of this embodiment, the inner portions 24 of end faces 20a, 20b which are in parallel with each other come to contact together, thus forming no recess on the inner circumferential surface in the weld portion, either.

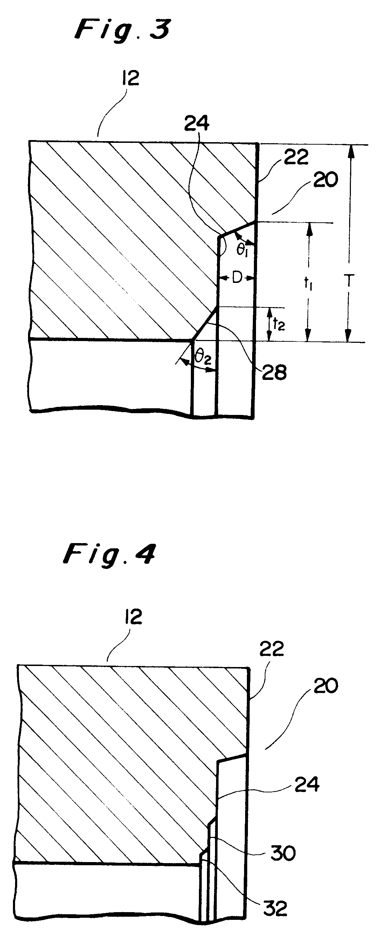

The shape of the inner portion 24 of end face 20 is a flat surface in the above embodiment, but, as shown in Fig. 3, the inner circumferential edge of the inner portion 24 may be chamfered in a taper shape. Here, let t₂ be a distance along the radial direction from a border line between this taper face 28 and the other part (main part) of the inner portion 24 to the inner circumference of the tubular member 12, and ϑ₂ be an angle between a face formed by the other part of the inner portion 24 and the generatrix of the taper face 28. This distance t₂ is dependent on the distance t₁ as described above, and is set normally in the range of 0.05t₁ ≦ t₂ ≦ 0.5t₁, preferably in the range of 0.1t₁ ≦ t₂ ≦ 0.4t₁. Further, ϑ₂ is set normally in the range of 10° ≦ ϑ₂ ≦ 75°, preferably in the range of 20° ≦ ϑ₂ ≦ 60°, more preferably in the range of 30° ≦ ϑ₂ ≦ 45°. These are conditions which were obtained by experiments.

Moreover, as shown in Fig. 4, one or more, two in the shown embodiment, step faces 30, 32 may be formed by cutting or grinding in the portion adjacent to the inner circumferential edge of the inner portion 24 in the end face 20 of tubular member 12. The area of these step faces 30, 32 is determined as considerably smaller than the other portion of the inner portion 24. Also, these step faces 30, 32 are perpendicular to the center axis of tubular member 12. When such step faces 30, 32 are formed, the amount of projection of the bead also becomes very small.

Next described are results of experiments actually performed under the above conditions. First, polyphenylene sulfide pipes ( 25A manufactured by Kureha Kagaku Kogyo: wall thickness 2.4 mm) were used as a pair of tubular members to be welded. End faces of the pipes were processed in the shape shown in Fig. 2. This time, the end faces were processed so that the above t₁ became 1.2 mm, D 0.3 mm, and ϑ₁ 75°. Using the non-contact-type welding apparatus having the heater composed of the brass heating plate and rod heater, welding was carried out under such conditions that the surface temperature of the heating plate was 470 °C, the distance from the end face of each pipe to the opposed heating plate 1 mm, the heating time 30 seconds, the press contact time 120 seconds, and the press contact pressure 600 kPa. As a result, a bead formed on the inner surface of the welded pipes was projected 0.5 mm from the inner circumference, having substantially a uniform shape in the circumferential direction. Also, the weld strength obtained according to JIS K6776 was 60 MPa.

Further, another experiment was carried out under the same conditions except that end faces of polyphenylene sulfide pipes, which were the same as the above, were processed in the shape shown in Fig. 3. This time, t₁ was 1.2 mm, D 0.3 mm, ϑ₁ 75°, t₂ 0.6 mm, and ϑ₂ 45°. In this case, no bead projecting from the inner circumferential surface of pipe was found, and the weld strength was 59 MPa.

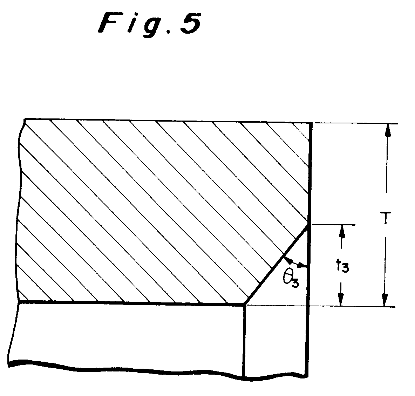

Further, as a comparative example, end faces of polyphenylene sulfide pipes same as the above were processed in the shape shown in Fig. 5 so as to obtain a conventional V-shape groove, and the same experiment was conducted therewith. In this case, the angle ϑ₃ was 30°, and t₃ 1 mm. In this experiment, the weld strength was 62 MPa which was satisfactory, but the amount of projection of a bead on the inner surface of pipe was great, 1.0 mm.

The above embodiments were illustrated to use the welding apparatus 10 as shown in Fig. 1, but the welding apparatus is not limited to the illustrated apparatus insofar as it can be applied to the non-contact-type welding method. For example, the heater comprising the heating plate as a heating method can be replaced by a heater of the infrared heating type. Also, the present invention can apply to the contact-type welding method.

As described above, if tubular members are welded according to the welding method of the present invention, weld strength durable for practical use can be attained and a bead is rarely formed on the inner circumferential surface of welded tubular members or if any, the size is very small. Accordingly, the present invention can solve or relieve the problems of pressure loss of fluid due to the bead and collection of microorganisms etc.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

## Claims

1. A welding method for tubular members in which end faces to be welded, of a pair of tubular members made of a thermoplastic resin are melted by heat of a heater and the end faces are urged against each other to be welded, comprising:
a step of, prior to melting said end faces of said tubular members, processing each of the end faces into a shape comprising a substantially flat, annular, inner portion which is normal to a center axis of the corresponding tubular member, and a substantially flat, annular, outer portion arranged coaxially outside said inner portion, said outer portion being located at a position outside said inner portion along said center axis and being normal to said center axis.

2. A welding method according to Claim 1, wherein the condition of 0.1T ≦ t₁ ≦ 0.8T is satisfied where T is a wall thickness of an end portion of each of said tubular members adjacent to said end face and t₁ a distance along the radial direction between an inner circumferential edge of said outer portion and an inner circumferential surface of said end portion,
wherein the condition of 0.1 mm ≦ D ≦ 1.5 mm is satisfied where D is a distance along the center axis between said outer portion and said inner portion, and
wherein the condition of 45° ≦ ϑ₁ ≦ 90° is satisfied where ϑ₁ is an angle between a generatrix of an annular boundary surface formed between the inner circumferential edge of said outer portion and an outer circumferential edge of said inner portion, and a face formed by said outer portion.

3. A welding method according to Claim 2, wherein the distance t₁ between the inner circumferential edge of said outer portion and the inner circumferential surface of said end portion satisfies the condition of 0.15T ≦ t₁ ≦ 0.7T.

4. A welding method according to Claim 2, wherein the distance t₁ between the inner circumferential edge of said outer portion and the inner circumferential surface of said end portion satisfies the condition of 0.2T ≦ t₁ ≦ 0.6T.

5. A welding method according to any one of Claims 2 to 4, wherein the distance D between said outer portion and said inner portion satisfies the condition of 0.2 mm ≦ D ≦ 1.25 mm.

6. A welding method according to Claim 5, wherein the distance D between said outer portion and said inner portion satisfies the condition of 0.3 mm ≦ D ≦ 1.0 mm.

7. A welding method according to any one of Claims 2 to 6, wherein the angle ϑ₁ between said generatrix of the boundary surface and the face formed by said outer portion satisfies the condition of 45° ≦ ϑ₁ ≦ 85°.

8. A welding method according to any one of the preceding claims comprising a step of chamfering an inner circumferential edge part of said inner portion in a taper shape.

9. A welding method according to Claim 8, wherein the condition of 10° ≦ ϑ₂ ≦ 75° is satisfied where ϑ₂ is an angle between a face of the taper shape formed in said chamfering step, and a face formed by said inner portion, and
wherein the condition of 0.05t₁ ≦ t₂ ≦ 0.5t₁ is satisfied where t₁ is a distance along the radial direction between an inner circumferential surface of an end portion of each of said tubular members adjacent to said end face, and an inner circumferential edge of said outer portion, and t₂ a distance along the radial direction between an outer circumferential edge of the face of said taper shape and the inner circumferential surface of said end portion.

10. A welding method according to Claim 9, wherein the angle ϑ₂ between the face of said taper shape and the face formed by said inner portion satisfies the condition of 20° ≦ ϑ₂ ≦ 60°.

11. A welding method according to Claim 9, wherein the angle ϑ₂ between the face of said taper shape and the face formed by said inner portion satisfies the condition of 30° ≦ ϑ₂ ≦ 45°.

12. A welding method according to Claim 9, wherein the distance t₂ between the outer circumferential edge of the face of said taper shape and the inner circumferential surface of said end portion satisfies the condition of 0.1t₁ ≦ t₂ ≦ 0.4t₁.

13. A welding method according to any one of the preceding claims comprising a step of forming at least one step face in a portion adjacent to an inner circumferential edge of said inner portion.
